# EUROPEAN PATENT APPLICATION

(11) **EP 3 716 217 A1**
(43) Date of publication of application: **30.09.2020**
(21) Application number: 19305403.8
(22) Date of filing: 28.03.2019
(51) Int. Cl.: G06T 15/40, G06T 7/10, G06T 19/00

(54) **TECHNIQUES FOR DETECTION OF REAL-TIME OCCLUSION**

(71) Applicant: InterDigital CE Patent Holdings, 75017 Paris (FR)
(72) Inventor: LUO, Tao, 35576 Cesson-Sévigné (FR); BAILLARD, Caroline, 35576 Cesson-Sévigné (FR); ROBERT, Philippe, 35576 Cesson-Sévigné (FR)
(74) Representative: Huchet, Anne

(57) **Abstract**

An apparatus and method are provided for generation of virtual and mixed reality content. In one embodiment, the method includes receiving video content having at least one scene with real objects and determining if virtual objects are to be added to the scene. A rough model is then generated of the scene with any to be added virtual objects and a segmentation is performed of the real objects in the scene. The occlusion contours and color models for the real objects in the scene is then performed based on the segmentation. Any virtual objects that will at least be partially occluded based on the rough model is determined and labeled so that the occlusion contours and the color models can be updated.

## Description

### TECHNICAL FIELD

The present disclosure relates generally to techniques for real time occlusion detection and in particular to techniques for occlusion detection in Virtual Reality (VR), Mixed Reality (MR) or Augmented Reality (AR) systems.

### BACKGROUND

This section is intended to introduce the reader to various aspects of art, which may be related to various aspects of the disclosure that are described and/or claimed below. This discussion is believed to be helpful in providing the reader with background information to facilitate a better understanding of the various aspects. Accordingly, it should be understood that these statements are to be read in this light, and not as admissions of prior art.

In recent years, immersive experiences created by Virtual Reality (VR), Mixed Reality (MR) and Augmented Reality (AR) devices have become the subject of increased attention. This is because VR/AR/MR can be used practically in every field to perform various functions including testing, entertaining, training, and teaching. For example, engineers and architects can use VR/AR/MR in modelling of new designs. Doctors can use VR/AR/MR technologies to practice and perfect difficult operations ahead of time and military experts can develop strategies by simulating battlefield operations. VR/AR/MR is also used extensively in the gaming and entertainment industries to provide interactive experiences and enhance audience enjoyment. VR/AR/MR enables the creation of a simulated environment that feels real and can accurately duplicate experiences in real or imaginary worlds.

One problem in the VR/AR/MR area has to do with inclusion of virtual objects into real scenes. Object insertion may mean that part of the real scene or virtual object has to be obstructed by other objects in the scene. This occlusion can be detected using techniques to help blend the virtual objects with the real scenes better prior to final viewing by a user. However, this can be challenging in the case without accurate 3D data, especially when the boundaries between virtual and real objects must be reproduced in such a way that they allow for a natural viewing, without causing flickering in a sequence of images. Consequently, improved techniques are desirous that can provide automatic real time occlusion detection when virtual objects are to be incorporated into real scenes.

### SUMMARY

An apparatus and method are provided for generation of virtual and mixed reality content. In one embodiment, the method includes receiving video content having at least one scene with real objects and determining if virtual objects are to be added to the scene. A rough model is then generated of the scene with any to be added virtual objects and a segmentation is performed of the real objects in the scene. The occlusion contours and color models for the real objects in the scene is then performed based on the segmentation. Any virtual objects that will at least be partially occluded based on the rough model is determined and labeled so that the occlusion contours and the color models can be updated.

In an embodiment the method comprises or the apparatus is further configured for updating said color models wherein said color models are based on temporal consistency within said video.

In an embodiment the method comprises or the apparatus is further configured for updating said occlusion contours and performing rendering modifications for said labelled objects wherein rendering modifications for said labelled objects are with constraint of said updated occlusion contours in a reproduced scene with said added virtual objects.

In an embodiment, said rough models are in 3D. In an embodiment said segmentation is performed for said rough 3D model using the geometry characteristics or learned shape prior from 3D model database.

In an embodiment, said 3D rough model is a 3D mesh model, or 3D point cloud, or 3D volume data. For example, said 3D rough model is generated by using metadata.

In an embodiment, said 3D rough model is aligned with a beginning frame of at least one of said video content
In an embodiment the method further comprises at least one of the following steps:
- providing a plurality of renderings of line drawings at a plurality of sampling viewpoints for said rough 3D model,
- selecting a best matched viewpoint based on comparing said plurality of renderings with said received scene of said content,
- refining an initial pose by the correspondence between 3D lines detected from said rough 3D model and 2D lines detected from said frames.

In an embodiment, said processor is configured to perform at least one of the following steps provide a plurality of renderings of line drawings at a plurality of sampling viewpoints for said rough 3D model, to select a best matched viewpoint based on comparing said plurality of renderings with said received scene of said content and to refine an initial pose by the correspondence between 3D lines detected from said rough 3D model and 2D lines detected from said frames.

In an embodiment, said initial occlusion contours for said real objects are generated by projecting said segmented rough 3D model on said aligned frames. In a further embodiment the occlusion contours are evolved to align with the image edges of said frames. In an embodiment said initial color models for said real objects are calculated for foreground and background with said aligned frames and said evolved occlusion contours, respectively.

In an embodiment, temporal consistency is used to update said occlusion contours for said real objects within sequential frames of said video content. In an embodiment said temporal consistency for said occlusion contour is that a minimum number of tracking points are provided in one or more said real objects within said sequential frame.

In an embodiment, temporal consistency is used to update said said color models for said real objects within sequential frames of said video content.

In an embodiment, a level of complexity is determined by object shape and amount of occlusion in said scene. In an embodiment said minimum number of tracking points are increased based on increasing level of complexity. In an embodiment said any tracking points provided in one frame appear in said sequential frame and maintain object shape and depth integrity.

In an embodiment, said temporal consistency for said color model is to combine the color model computed in the former frame and the color model computed in current frame using a weighted average.
In an embodiment at least one of said occlusion contours and said color models are updated and refined for said real objects using said tracking points.

In an embodiment, the visibility of each said object is determined within each sequential frame of said video content. In an embodiment said object is not rendered if it is invisible in said sequential frame so that said occlusion contour is reinitialized based on said segmented rough 3D model if there are not enough tracking points for said real objects.

In an embodiment, at least a scene for said sequential frame is reproduced by modifying the rendering of said labelled objects with respect to said updated occlusion contours and said visibility and color of said labelled objects are refined along the said occlusion contours in said sequential frame.

Additional features and advantages are realized through similar techniques and other embodiments and aspects are described in detail herein and are considered a part of the claimed disclosure. For a better understanding of the advantages and features, refer to the description and to the drawings.

### BRIEF DESCRIPTION OF THE DRAWINGS

The present disclosure will be better understood and illustrated by means of the following embodiment and execution examples, in no way limitative, with reference to the appended figures on which:
Figure 1 schematically represents a functional overview of an encoding and decoding system according one or more embodiments of the disclosure;
Figure 2 schematically represents a system, according to one embodiment;
Figure 3 schematically represents a system, according to another embodiment;
Figure 4 schematically represents a system, according to another embodiment;
Figure 5 schematically represents a system, according to another embodiment;
Figure 6 schematically represents a system, according to another embodiment
Figure 7 schematically represents a system, according to another embodiment;
Figure 8 schematically represents a system according to another embodiment,
Figure 9 schematically represents a system according to another embodiment,
Figure 10 schematically represents an immersive video rendering device according to an embodiment,
Figure 11 schematically represents an immersive video rendering device according to another embodiment,
Figure 12 schematically represents an immersive video rendering device according to another embodiment,
Figure 13 is a flow chart representation of a methodology according to one embodiment,
Figures 14 (a) to (e) are next step representations of renderings generated according to embodiment of Figure 13;
Figure 15 is a flow chart representation of another methodology according to one embodiment; and
   Wherever possible, the same reference numerals will be used throughout the figures to refer to the same or like parts.

### DESCRIPTION

It is to be understood that the figures and descriptions of the present disclosure have been simplified to illustrate elements that are relevant for a clear understanding of the present disclosure, while eliminating, for purposes of clarity, many other elements found in typical digital multimedia content delivery methods and systems. However, because such elements are well known in the art, a detailed discussion of such elements is not provided herein. The disclosure herein is directed to all such variations and modifications known to those skilled in the art.

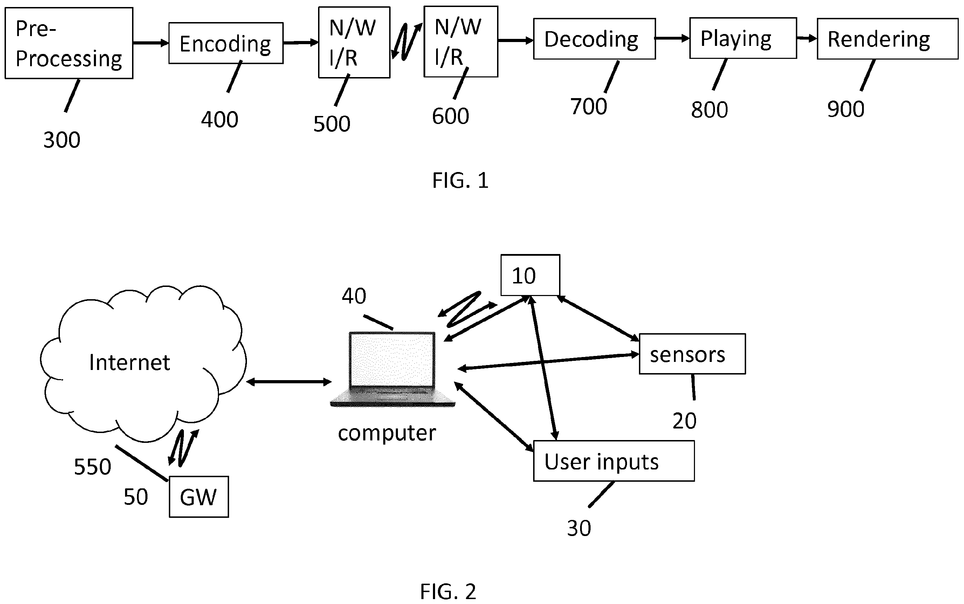

Figure 1 schematically illustrates a general overview of an encoding and decoding system according to one or more embodiments. The system of Figure 1 is configured to perform one or more functions. A pre-processing module 300 may be provided to prepare the content for encoding by an encoding device 400. The pre-processing module 300 may perform multi-image acquisition, merging of the acquired multiple images in a common space (for example, a 3D sphere from which the direction to each pixel is encoded, by a mapping into a 2D frame using, for example, but not limited to, an equirectangular mapping or a cube mapping). The pre-processing module 300 might instead acquire an omnidirectional video in a particular format (for example, equi-rectangular) as input, and pre-process the video to change the mapping into a format more suitable for encoding. Depending on the acquired video data representation, the pre-processing module 300 may perform a mapping space change. Another implementation might combine the multiple images into a common space having a point cloud representation. Encoding device 400 packages the content in a form suitable for transmission and/or storage for recovery by a compatible decoding device 700. In general, though not strictly required, the encoding device 400 provides a degree of compression, allowing the common space to be represented more efficiently (i.e., using less memory for storage and/or less bandwidth required for transmission). In the case of a 3D sphere mapped onto a 2D frame, the 2D frame is effectively an image that can be encoded by any of a number of image (or video) codecs. In the case of a common space having a point cloud representation, the encoding device 400 may provide point cloud compression, which is well known, e.g., by octree decomposition. After being encoded, the data, which may be encoded immersive video data or 3D CGI encoded data for instance, are sent to a network interface 500, which may be typically implemented in any network interface, for instance present in a gateway. The data are then transmitted through a communication network 550, such as internet but any other network may be foreseen. Then the data are received via network interface 600. Network interface 600 may be implemented in a gateway, in a television, in a set-top box, in a head mounted display (HMD) device, in an immersive (projective) wall or in any immersive video rendering device. After reception, the data are sent to a decoding device 700. Decoded data are then processed by a player 800. Player 800 prepares the data for the rendering device 900 and may receive external data from sensors or users input data. More precisely, the player 800 prepares the part of the video content that is going to be displayed by the rendering device 900. The decoding device 700 and the player 800 may be integrated in a single device (e.g., a smartphone, a game console, a STB, a tablet, a computer, etc.). In another embodiment, the player 800 may be integrated in the rendering device 900.

Various types of systems may be used to perform functions of an immersive display device, for rendering an immersive video or an interactive immersive experience (e.g., a VR game). Embodiments of a system, for processing augmented reality (AR) or virtual reality (VR) content are illustrated in figures 2 to 9. Such systems are provided with one or more processing functions, and include an immersive video rendering device which may comprise a head-mounted display (HMD), a tablet, or a smartphone for example, and may optionally include one or more sensors. The immersive video rendering device may also include interface modules between the display device and one or more modules performing the processing functions. The presentation processing functions may be integrated into the immersive video rendering device or performed by one or more processing devices. Such a processing device may include one or more processors and a communication interface with the immersive video rendering device, such as a wireless or wired communication interface.

The processing device may also include a communication interface (e.g., 600) with a wide access network such as internet and access content located on a cloud, directly or through a network device such as a home or a local gateway. The processing device may also access a local storage device (not shown) through an interface such as a local access network interface (not shown), for example an Ethernet type interface. In an embodiment, the processing device may be provided in a computer system having one or more processing units. In another embodiment, the processing device may be provided in a smartphone which can be connected by a wired link or a wireless link to the video to change the mapping into a format more suitable for encoding. Depending on the acquired video data representation, the pre-processing module 300 may perform a mapping space change. After being encoded, the data, which may be encoded immersive video data, or 3D CGI encoded data for instance, are sent to a network interface 500, which may be typically implemented in any network interface, for instance present in a gateway. The data are then transmitted through a communication network, such as internet but any other network may be foreseen. Then the data are received via network interface 600. Network interface 600 may be implemented in a gateway, in a television, in a set-top box, in a head mounted display device, in an immersive (projective) wall or in any immersive video rendering device. After reception, the data are sent to a decoding device 700. Decoded data are then processed by a player 800. Player 800 prepares the data for the rendering device 900 and may receive external data from sensors or users input data. More precisely, the player 800 prepares the part of the video content that is going to be displayed by the rendering device 900. The decoding device 700 and the player 800 may be integrated in a single device (e.g., a smartphone, a game console, a STB, a tablet, a computer, etc.). In another embodiment, the player 800 may be integrated in the rendering device 900.

An "immersive content" often refers to a video or other streamed content or images, commonly encoded as a rectangular frame that is a two-dimension array of pixels (i.e., element of color information) like a "regular" video or other form of image content. In many implementations, the following processes may be performed for presentation of that immersive content. To be rendered, the two-dimensional frame is, first, mapped on the inner face of a convex volume, also referred to as mapping surface (e.g. a sphere, a cube, a pyramid), and, second, a part of this volume is captured by a virtual camera. Images captured by the virtual camera are displayed by the screen of the immersive display device. In some embodiments, stereoscopic video is provided and decoding results in one or two rectangular frames, which can be projected onto two mapping surfaces, one for each of the user's eyes, a portion of which are captured by two virtual cameras according to the characteristics of the display device.

Pixels in the content appear to the virtual camera(s) according to a mapping function from the frame. The mapping function depends on the geometry of the mapping surface. For a same mapping surface (e.g., a cube), various mapping functions are possible. For example, the faces of a cube may be structured according to different layouts within the frame surface. A sphere may be mapped according to an equirectangular projection or to a gnomonic projection for example. The organization of pixels resulting from the selected projection function may modify or break line continuities, orthonormal local frame, pixel densities and may introduce periodicity in time and space. These are typical features that are used to encode and decode videos. Typically, today, there is a lack of taking specificities of immersive videos into account in encoding and decoding methods. Indeed, as immersive videos are 360° videos, a panning, for example, introduces motion and discontinuities that require a large amount of data to be encoded while the content of the scene does not change. Taking immersive videos specificities into account while encoding and decoding video frames would bring valuable advantages to the state-of-art methods.

In another embodiment, the system includes an auxiliary device which communicates with the immersive video rendering device and with the processing device. In such an embodiment, the auxiliary device may perform at least one of the processing functions. The immersive video rendering device may include one or more displays. The device may employ optics such as lenses in front of each display. The display may also be a part of the immersive display device such as for example in the case of smartphones or tablets. In another embodiment, displays and optics may be embedded in a helmet, in glasses, or in a wearable visor. The immersive video rendering device may also include one or more sensors, as described later, for use in the rendering. The immersive video rendering device may also include interfaces or connectors. It may include one or more wireless modules in order to communicate with sensors, processing functions, handheld or devices or sensors related to other body parts.

When the processing functions are performed by the immersive video rendering device, the immersive video rendering device can be provided with an interface to a network directly or through a gateway to receive and/or transmit content.

The immersive video rendering device may also include processing functions executed by one or more processors and configured to decode content or to process content. By processing content here, it is understood functions for preparing content for display. This may include, for instance, decoding content, merging content before displaying it and modifying the content according to the display device.

One function of an immersive content rendering device is to control a virtual camera which captures at least a part of the content structured as a virtual volume. The system may include one or more pose tracking sensors which totally or partially track the user's pose, for example, the pose of the user's head, in order to process the pose of the virtual camera. One or more positioning sensors may be provided to track the displacement of the user. The system may also include other sensors related to the environment for example to measure lighting, temperature or sound conditions. Such sensors may also be related to the body of a user, for instance, to detect or measure sweating or heart rate. Information acquired through these sensors may be used to process the content. The system may also include user input devices (e.g. a mouse, a keyboard, a remote control, a joystick). Information from user input devices may be used to process the content, manage user interfaces or to control the pose of the virtual camera (or an actual camera). Sensors and user input devices communicate with the processing device and/or with the immersive rendering device through wired or wireless communication interfaces.

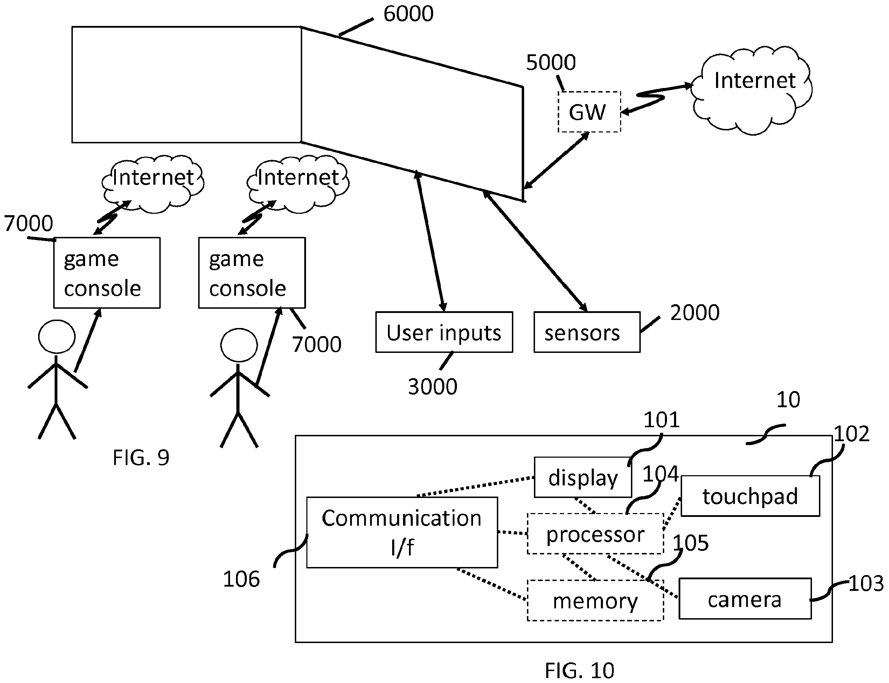

An embodiment of the immersive video rendering device 10, will be described in more detail with reference to Figure 10. The immersive video rendering device includes a display 101. The display is, for example an OLED or LCD type display. The immersive video rendering device 10 is, for instance a HMD, a tablet, or a smartphone. The device 10 may include a touch sensitive surface 102 (e.g. a touchpad or a tactile screen), a camera 103, a memory 105 in connection with at least one processor 104 and at least one communication interface 106. The at least one processor 104 processes the signals received from the sensor(s) 20 (Figure 2). Some of the measurements from sensors are used to compute the pose of the device and to control the virtual camera. Sensors which may be used for pose estimation include, for instance, gyroscopes, accelerometers or compasses. In more complex systems, a rig of cameras for example may also be used. The at least one processor 104 performs image processing to estimate the pose of the device 10. Some other measurements may be used to process the content according to environmental conditions or user reactions. Sensors used for detecting environment and user conditions include, for instance, one or more microphones, light sensor or contact sensors. More complex systems may also be used such as, for example, a video camera tracking eyes of a user. In such a case the at least one processor performs image processing to perform the expected measurement. Data from sensor(s) 20 and user input device(s) 30 may also be transmitted to the computer 40 which will process the data according to the input of the sensors.

Memory 105 includes parameters and code program instructions for the processor 104. Memory 105 may also include parameters received from the sensor(s) 20 and user input device(s) 30. Communication interface 106 enables the immersive video rendering device to communicate with the computer 40 Figure 2). The Communication interface 106 of the processing device may include a wireline interface (for example a bus interface, a wide area network interface, a local area network interface) or a wireless interface (such as an IEEE 802.11 interface or a Bluetooth® interface). Computer 40 sends data and optionally control commands to the immersive video rendering device 10. The computer 40 processes the data, for example to prepare the data for display by the immersive video rendering device 10. Processing may be carried out exclusively by the computer 40 or part of the processing may be carried out by the computer and part by the immersive video rendering device 10. The computer 40 is connected to internet, either directly or through a gateway or network interface 50. The computer 40 receives data representative of an immersive video from the internet, processes these data (for example. decode the data and may prepare the part of the video content that is going to be displayed by the immersive video rendering device 10) and sends the processed data to the immersive video rendering device 10 for display. In another embodiment, the system may also include local storage (not represented) where the data representative of an immersive video are stored, said local storage may be on the computer 40 or on a local server accessible through a local area network for instance (not represented).

Embodiments of a first type of system for displaying augmented reality, virtual reality, augmented reality (also mixed reality) or any content from augmented reality to virtual reality will be described with reference to Figures 2 to 6. In one embodiment, these are combined with a large field-of-view content that can provide up to a 360 degree view of a real, fictional or mixed environment. This large field-of-view content may be, among others, a three-dimension computer graphic imagery scene (3D CGI scene), a point cloud, streaming content or an immersive video or panoramic picture or images. Many terms may be used to define technology that provides such content or videos such as for example Virtual Reality (VR), Augmented Reality (AR) 360, panoramic, 4π, steradians, omnidirectional, immersive and alongside large-field- of-view as previously indicated.

Figure 2 schematically illustrates an embodiment of a system configured to decode, process and render immersive videos. The system includes an immersive video rendering device 10, one or more sensors 20, one or more user input devices 30, a computer 40 and a gateway 50 (optional).

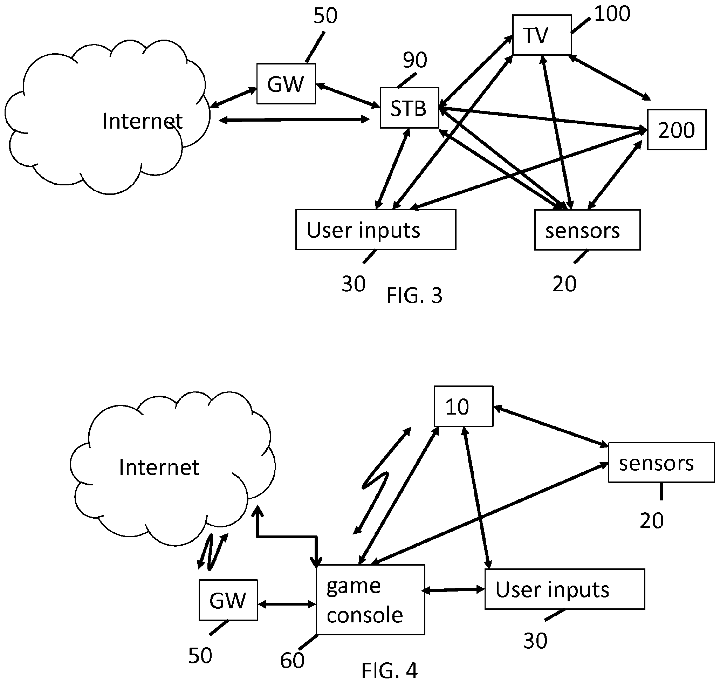

Figure 3 schematically represents a second embodiment of a system configured to decode, process and render immersive videos. In this embodiment, an STB 90 is connected to a network such as internet directly (i.e. the STB 90 includes a network interface) or via a gateway 50. The STB 90 is connected through a wireless interface or through a wired interface to a rendering device such as a television set 100 or an immersive video rendering device 200. In addition to classic functions of an STB, STB 90 includes processing functions to process video content for rendering on the television 100 or on any immersive video rendering device 200. These processing functions are similar to the processing functions described for computer 40 and are not described again here. Sensor(s) 20 and user input device(s) 30 are also of the same type as the sensor(s) and input device(s) described earlier with reference to Figure 2. The STB 90 obtains the data representative of the immersive video from the internet. In another embodiment, the STB 90 obtains the data representative of the immersive video from a local storage (not represented) where the data representative of the immersive video are stored.

Figure 4 schematically represents a third embodiment of a system configured to decode, process and render immersive videos. In the third embodiment a game console 60 processes the content data. Game console 60 sends data and optionally control commands to the immersive video rendering device 10. The game console 60 is configured to process data representative of an immersive video and to send the processed data to the immersive video rendering device 10 for display. Processing may be done exclusively by the game console 60 or part of the processing may be done by the immersive video rendering device 10.

The game console 60 is connected to internet, either directly or through a gateway or network interface 50. The game console 60 obtains the data representative of the immersive video from the internet. In another embodiment, the game console 60 obtains the rendering device 10. Processing may be carried out exclusively by the computer 40 or part of the processing may be carried out by the computer and part by the immersive video rendering device 10. The computer 40 is connected to internet, either directly or through a gateway or network interface 50. The computer 40 receives data representative of an immersive video from the internet, processes these data (for example. decode the data and may prepare the part of the video content that is going to be displayed by the immersive video rendering device 10) and sends the processed data to the immersive video rendering device 10 for display. In another embodiment, the system may also include local storage (not represented) where the data representative of an immersive video are stored, said local storage may be on the computer 40 or on a local server accessible through a local area network for instance (not represented).

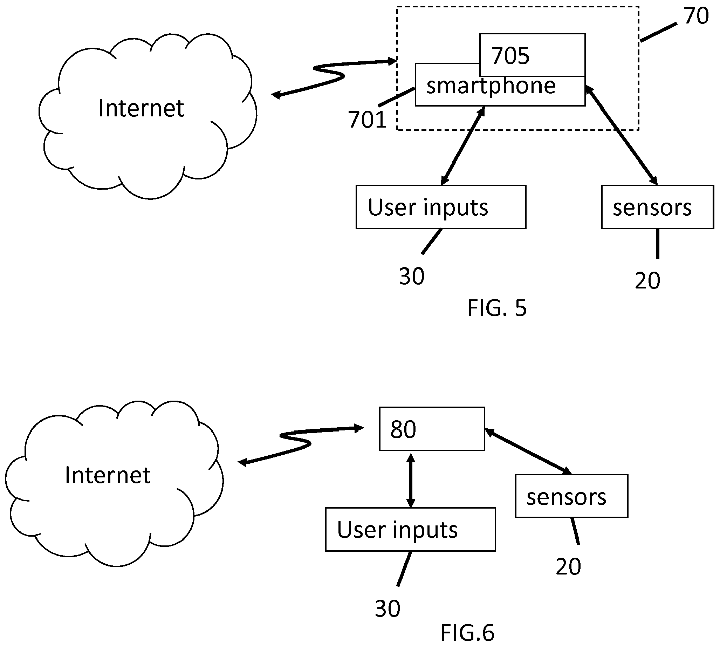

Figure 5 schematically represents a fourth embodiment of a system configured to decode, process and render immersive videos the immersive video rendering device 70 is provided by a smartphone 701 inserted in a housing 705. The smartphone 701 may be connected to internet and thus may obtain data representative of an immersive video from the internet. In another embodiment, the smartphone 701 obtains data representative of an immersive video from a local storage (not represented) where the data representative of an immersive video are stored, said local storage may be on the smartphone 701 or on a local server accessible through a local area network for instance (not represented).

Figure 6 schematically represents a fifth embodiment of the first type of system in which the immersive video rendering device 80 includes functionalities for processing and displaying the data content. The system includes an immersive video rendering device 80, sensors 20 and user input devices 30. The immersive video rendering device 80 is configured to process (e.g. decode and prepare for display) data representative of an immersive video possibly according to data received from the sensors 20 and from the user input devices 30. The immersive video rendering device 80 may be connected to Internet and thus may obtain data representative of an immersive video from the internet. In another embodiment, the immersive video rendering device 80 obtains data representative of an immersive video from a local storage (not represented) where the data representative of an immersive video are stored, said local storage may be provided on the rendering device 80 or on a local server accessible through a local area network for instance (not represented).

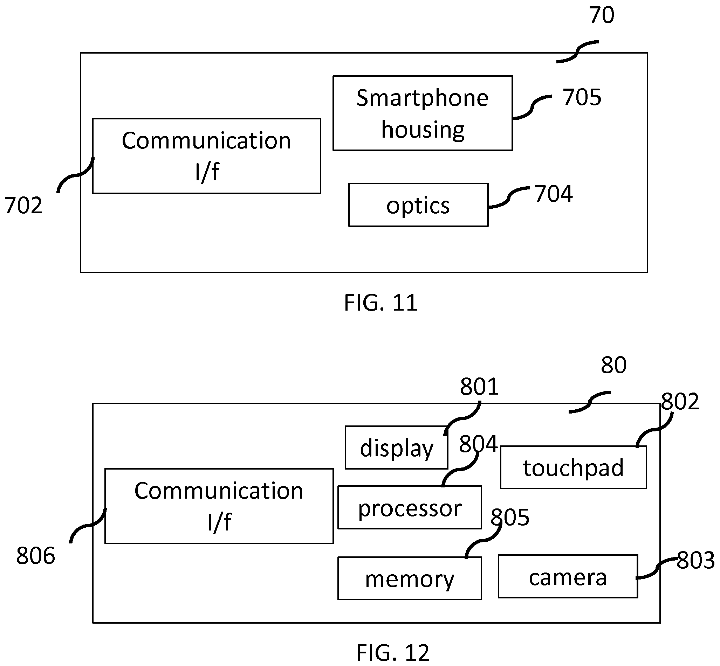

An embodiment of immersive video rendering device 80 is illustrated in Figure 12. The immersive video rendering device includes a display 801, for example an OLED or LCD type display, a touchpad (optional) 802, a camera (optional) 803, a memory 805 in connection with at least one processor 804 and at least one communication interface 806. Memory 805 includes parameters and code program instructions for the processor 804. Memory 805 may also include parameters received from the sensors 20 and user input devices 30. Memory 805 may have a large enough capacity to store data representative of the immersive video content. Different types of memories may provide such a storage function and include one or more storage devices such as a SD card, a hard disk, a volatile or non-volatile memory...) Communication interface 806 enables the immersive video rendering device to communicate with internet network. The processor 804 processes data representative of the video to display images on display 801. The camera 803 captures images of the environment for an image processing step. Data are extracted from this step to control the immersive video rendering device.

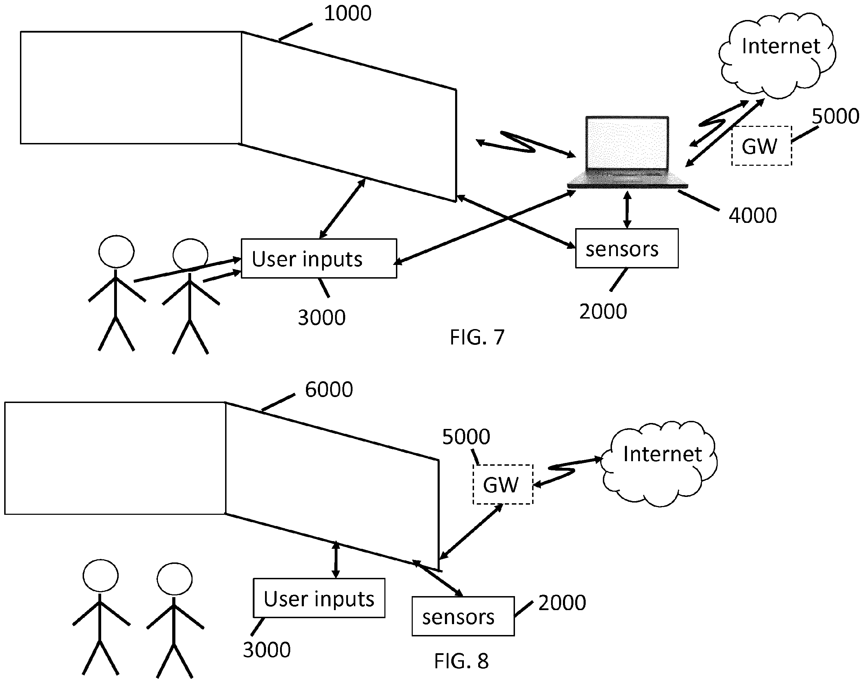

Embodiments of a second type of system, for processing augmented reality, virtual reality, or augmented virtuality content are illustrated in figures 7 to 9. In these embodiments the system includes an immersive wall or CAVE (a recursive acronym for "CAVE Automatic Virtual Environment").

Figure 7 schematically represents an embodiment of the second type of system including a display 1000 - an immersive (projective) wall which receives data from a computer 4000. The computer 4000 may receive immersive video data from the internet. The computer 4000 can be connected to internet, either directly or through a gateway 5000 or network interface. In another embodiment, the immersive video data are obtained by the computer 4000 from a local storage (not represented) where data representative of an immersive video are stored, said local storage may be in the computer 4000 or in a local server accessible through a local area network for instance (not represented).

This system may also include one or more sensors 2000 and one or more user input devices 3000.The immersive wall 1000 may be an OLED or LCD type, or a projection display, and may be equipped with one or more cameras (not shown). The immersive wall 1000 may process data received from the more or more sensors 2000. The data received from the sensor(s) 2000 may, for example, be related to lighting conditions, temperature, environment of the user, e.g., the position of objects, and the position of a user. In some cases, the imagery presented by immersive wall 1000 may be dependent upon the position of a user, for example to adjust the parallax in the presentation.

The immersive wall 1000 may also process data received from the one or more user input devices 3000. The user input device(s) 3000 may send data such as haptic signals in order to give feedback on the user emotions. Examples of user input devices 3000 include for example handheld devices such as smartphones, remote controls, and devices with gyroscope functions.

Data may also be transmitted from sensor(s) 2000 and user input device(s) 3000 data to the computer 4000. The computer 4000 may process the video data (e.g. decoding them and preparing them for display) according to the data received from these sensors/user input devices. The sensors signals may be received through a communication interface of the immersive wall. This communication interface may be of Bluetooth type, of WIFI type or any other type of connection, preferentially wireless but may also be a wired connection.

Computer 4000 sends the processed data and, optionally, control commands to the immersive wall 1000. The computer 4000 is configured to process the data, for example prepare the data for display by the immersive wall 1000. Processing may be done exclusively by the computer 4000 or part of the processing may be done by the computer 4000 and part by the immersive wall 1000.

Figure 8 schematically represents another embodiment of the second type of system. The system includes an immersive (projective) wall 6000 which is configured to process (for example decode and prepare data for display) and display the video content and further includes one or more sensors 2000, and one or more user input devices 3000.

The immersive wall 6000 receives immersive video data from the internet through a gateway 5000 or directly from internet. In another embodiment, the immersive video data are obtained by the immersive wall 6000 from a local storage (not represented) where the data representative of an immersive video are stored, said local storage may be in the immersive wall 6000 or in a local server accessible through a local area network for instance (not represented).

This system may also include one or more sensors 2000 and one or more user input devices 3000.The immersive wall 6000 may be of OLED or LCD type and be equipped with one or more cameras. The immersive wall 6000 may process data received from the sensor(s) 2000 (or the plurality of sensors 2000). The data received from the sensor(s) 2000 may for example be related to lighting conditions, temperature, environment of the user, such as position of objects.

The immersive wall 6000 may also process data received from the user input device(s) 3000. The user input device(s) 3000 send data such as haptic signals in order to give feedback on the user emotions. Examples of user input devices 3000 include for example handheld devices such as smartphones, remote controls, and devices with gyroscope functions.

The immersive wall 6000 may process the video data (e.g. decoding them and preparing them for display) according to the data received from these sensor(s)/user input device(s). The sensor signals may be received through a communication interface of the immersive wall. This communication interface may include a Bluetooth® type, a WIFI type or any other type of wireless connection, or any type of wired connection. The immersive wall 6000 may include at least one communication interface to communicate with the sensor(s) and with the internet.

Figure 9 illustrates another embodiment in which an immersive wall is used for gaming. One or more gaming consoles 7000 are connected, for example through a wireless interface to the immersive wall 6000. The immersive wall 6000 receives immersive video data from the internet through a gateway 5000 or directly from internet. In an alternative embodiment, the immersive video data are obtained by the immersive wall 6000 from a local storage (not represented) where the data representative of an immersive video are stored, said local storage may be in the immersive wall 6000 or in a local server accessible through a local area network for instance (not represented).

Gaming console 7000 sends instructions and user input parameters to the immersive wall 6000. Immersive wall 6000 processes the immersive video content, for example, according to input data received from sensor(s) 2000 and user input device(s) 3000 and gaming console(s) 7000 in order to prepare the content for display. The immersive wall 6000 may also include internal memory to store the content to be displayed.

In a VR/AR/MR environment, one problem that occurs has to do with inclusion of virtual objects into real scenes. One particular challenge, has to do with objects that are to appear in layered positions, such that they are in front or behind one another. Detection of occlusion contours are of particular concern when virtual objects are added to real scenes because object contours must be blended naturally into real scenes in a way that boundaries look real and without avoid flickering in the sequence. This is often even a bigger concern when there are multiple sequential scenes such as in videos. Several techniques that deal with occlusion detection can be considered in video sequence, such as could be employed in the applications of augmented reality/mixed reality, can now be discussed and their shortcomings and advantages can be explored.

Traditional occlusion detection techniques can be classified into three categories according to the reference data, namely 3D model-based, depth-based, and 2D contour-based methods. In 3D model-based methods, the accurate geometric models of real objects must be known, and the occlusion detection is realized by depth test via object tracking. Thus, the accuracy of the model as well as the performance of tracking have a strong influence on the results. The depth-based methods require the corresponding depth data as input from an equipped depth sensor. In such a scenario, the occlusion detection is formulated as an alpha matting problem. The raw depth information of the real scene is taken to realize rough foreground and background segmentation, while the blending coefficient between transitions where depth values are noisy is estimated based on the input color image. The main contribution relies on an adaptive trimap generation, which extends the unknown regions depending on the boundary and fuzziness in the color image. Herein the challenge is to find good sample pairs in regions where foreground and background colors are difficult to distinguish. And the noisy depth data results in flickering that is visible throughout multiple frames. For the video sequence, each frame is processed to compute its alpha matte individually without using temporal information.

Another typical depth-based method that can be considered concentrates on enhancing the raw depth data through snapping the depth edges to the image edges. It requires that a good initial contour is detected for the occluding object, and the depth edges are close to their target image edges. This method is employed to deal with dynamic occlusion like a moving hand, and has the pleasing results at almost front-facing viewpoints. The complementary operations are implemented at every frame to fill empty holes from view changes. However, the temporal information is not yet employed to make the contours consistent. In such depth-based methods, the quality of input depth data is important to the performance of occlusion detection.

In the 2D contour-based methods, like, the initial contour of occluding object is usually generated by an interactive segmentation, and then the occluding object is tracked to predict the displacements of occlusion contour, which is refined using a graph cut method. The main drawback of this is that the user's interaction is on demand and it's unable to deal with occlusion of multiple objects.

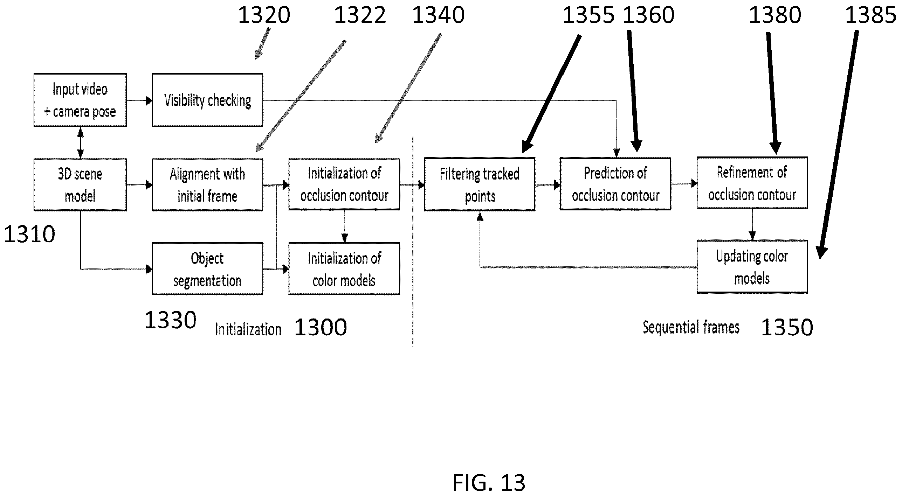

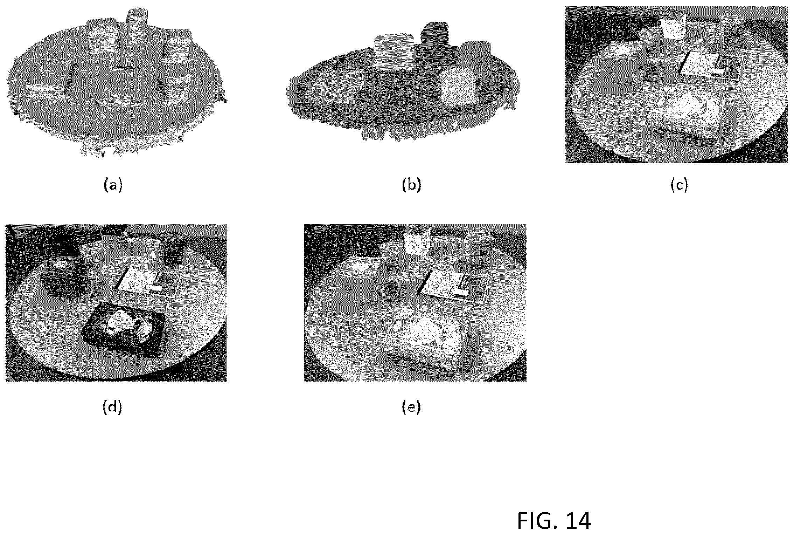

Unfortunately, all the methods considered have major drawbacks and do not provide optimal results. Figures 13 to 15 provides different embodiments displaying VR/AR/MR methods where improved techniques can be considered. Figures 13 and 14 will now be discussed in conjunction with one another to enhance understanding.

As shown in Figure 13, a flowchart illustration of one embodiment is provided. In this embodiment, one example of a method for providing real-time occlusion detection is demonstrated. In one instance, the methodology can be divided into two phases, namely initialization referenced at 1300 and sequential processing referenced at 1350. In the phase of initialization, the occlusion contour is generated automatically for each occluding object that is visible on the initial frames. And the color models for these objects are also calculated individually. The input contains a reference 3D model of the current real scene and the live video captured with the device camera as shown at 1310. Herein, the 3D scene model could be imported from different sources. In one embodiment, the 3D scene model is reconstructed from the captures with depth sensor. In another embodiment, it is retrieved from a 3D model database to be best matched with the current scene. And it could also be generated using an online method (e.g. Multiview stereo) with the images captured by color camera. Herein the quality of 3D model is not required to be precise, but it should contain complete information of the scene.

Figures 14(a) to (e) provide a next step rendering of an example as provided by the embodiment of Figure 13. In this example, the 3D model captured was provided via using Intel Realsense.

In Figure 14(a), as illustrated, although the 3D information of a complete scene is provided, the reconstruction of fine details is not precise. This is especially true along the boundaries of objects that are important for occlusion detection and can be further refined at a later time. Moreover, the input camera poses could be obtained directly from the device sensor. In another embodiment, they are calculated by video tracking.

In this embodiment, once the reference 3D model is constructed, the analysis of its content is made. In one embodiment, the 3D model is segmented into individual objects with prior knowledge about the scene. As shown in Figure 14(b), the occluding objects in the scene are labeled using a method of geometric segmentation. This is also shown in Figure 13 at 1330.

In another embodiment, the scene analysis could be implemented using a supervised learning method to recognize the objects in the scene and obtain a semantic segmentation.

Looking back on Figure 13, once the video stream is input, the reference 3D model should be aligned with the initial frames immediately as referenced at 1322 and other things like object visibility is detected (1320). In one embodiment, the line-based method is employed to align the 3D model and 2D image. First the 3D model is rendered as line drawings at sampling viewpoints, and the best matched viewpoint is selected as the initial pose. Then the 3d bounding box is aligned with the orientation of 2D bounding box to refine the initial pose. Finally, the initial correspondences between 3D lines and 2D lines could be built, which refine the pose further to make the 3D model aligned with the initial image. In another embodiment, the 3D scene model is reconstructed in the same system as color camera, and thus the input camera pose could be used to directly align the 3D model to initial frame.

After the 3D reference model is aligned well with the initial frame, the 3D data of segmented objects could generate the initial occlusion contours and any color models (see step 1340 and Figure 14(c)). In one embodiment, the 2D occlusion contour could be generated by rendering the segmented 3D model. And then it's evolved individually into the image contours using a method like graph cut. Thus, for each object, its color models (e.g. Gaussian Mixture Models) for foreground and background are calculated, which would be used in the consequent refinement of contour and updated temporally.

The sequential processing could be implemented in parallel due to the independency of the occluding objects in the scene. For each object, the tracked points are extracted. In one embodiment, the tracked points include both the sampling points on the contour detected in the former frame and the feature points in the region bounded by the contour. Then a method of optical flow is employed to track these points (see Figure 13, 1355) in the next frame. The number of points in the former frame is defined according to the complexity of the object shape, that is more tracked points are used to keep the smoothness of complicated contour, and fewer tracked points are used to reduce the computation cost for simple shapes.

With the tracked points in the next frame, the occlusion contour of each object could be predicted (see Figure 13 at 1360) with the estimated displacements. As shown in Figure 14(d), the contour points for a box object is demonstrated. Meanwhile if the number of tracked points in the next frame is smaller than a threshold, it is assumed that there are not enough reliable tracked points. Therefore, the prediction of occlusion with these points is not reliable either. Herein the 3D reference model is employed again to generate the prediction of occlusion. This verification of visibility could be implemented in another thread or on a GPU without influence of the computation performance.

To refine the predicted occlusion contour, the color models computed in the former frame and those computed in current frame are combined with a weight, which could keep the temporal consistency of color models. As shown in Figure 14(e), the refined occlusion masks are shown in another frame. In one embodiment, the contour is then evolved in a narrow neighboring region using a method like graph cut so as to align with its image contour. After this refinement, its color models are updated for the use in the next frame. This is also shown at Figure 13 at 1380 and 1385.

Finally, the sequential processing of occlusion detection could be implemented in real time. For the initialization, it depends on the requisition of reference 3D model and the input of camera pose. Compared with the state of the art, embodiments help to avoid the interaction of the user and extra depth sensor while the temporal consistency is kept even if the quality of reference 3D model is not good enough.

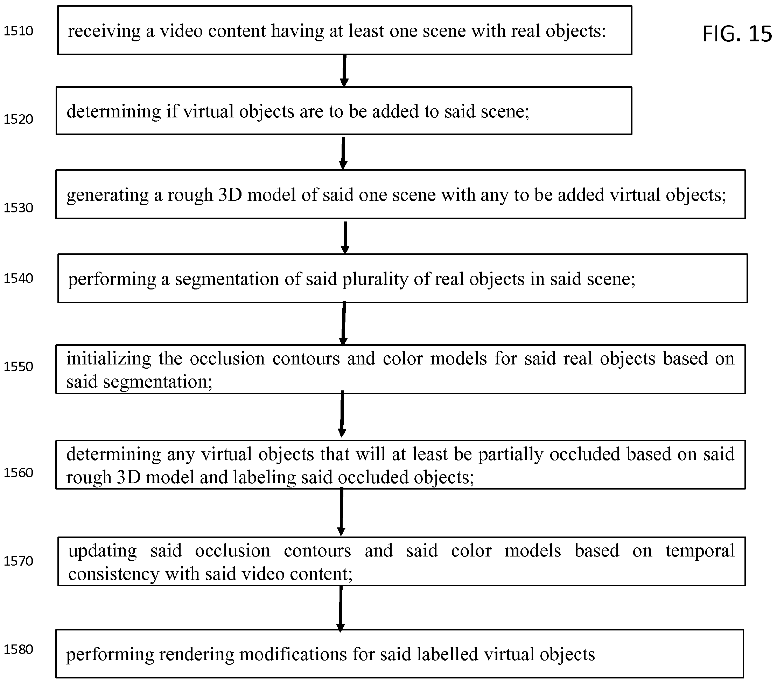

Figure 15 provides for another flow chart illustration of one embodiment. In step 1510 a video content is received such as by a processor. The content has at least one scene. In step 1520, it is determined if virtual objects are to be added to the at least one scene. In step 1530, when there will be virtual objects to be added, a rough 3D model of the scene with any to be added virtual objects is generated. The rough 3D model for this scene is captured by depth sensors, or retrieved from a 3D model database, or reconstructed from video frames. In step 1540, a segmentation is performed for the objects in the scene. This segmentation is a geometric segmentation using only geometry data, or a semantic segmentation with meaningful labelling for segmented objects. In step 1550, an occlusion contour and color models for each real object in the scene are initialized within the beginning frames of the video based on the segmentation. This step is implemented in parallel to accelerate the computation in real time. In step 1560, a determination is made based on the rough 3D model as whether any of the virtual objects will be at least partially occluded and the occluded objects are labelled. This means that in the viewpoint of current video frame, there exist any objects closer to camera than the virtual object along any rays to the virtual object.. In step 1570, the occlusion contours and color models for real objects are updated based on temporal consistency within the sequential frames of the video. This step is implemented in parallel to accelerate the computation in real time. Meanwhile, the reliability of each updated occlusion contour is measured such as the percentage of tracked points. Otherwise, the segmentation of the rough 3D model in step 1540 is employed to reinitialize the unreliable occlusion contour. In step 1580 all labeled virtual objects are examined and special visibility modifications are made to ensure that they appear realistically in the rendering of final scene, especially along the refined occlusion contours. The scene can then be reproduced, having the newly added virtual objects having refined rendering modifications when occluded.

While some embodiments have been described, it will be understood that those skilled in the art, both now and in the future, may make various improvements and enhancements which fall within the scope of the claims which follow. These claims should be construed to maintain the proper protection for the disclosure first described.

## Claims

1. A method comprising:
receiving video content having at least one scene with real objects:
determining if virtual objects are to be added to said scene;
generating a rough model of said scene with any to be added virtual objects;
performing a segmentation of said real objects in said scene;
initializing the occlusion contours and color models for said real objects in said scene based on said segmentation; and
determining any virtual objects that will at least be partially occluded based on said rough model and labeling said occluded objects.

2. An apparatus comprising:
at least one processor configured to
receive video content having at least one scene with real objects:
determine if virtual objects are to be added to said scene and generate a rough model of said at least one scene with any to be added virtual objects;
generate a rough model of said scene with any to be added virtual objects;
perform a segmentation of said real objects in said scene;
initialize the occlusion contours and color models for said real objects in said scene based on said segmentation;
determine any virtual objects that will at least be partially occluded based on said rough model and labeling said occluded objects.

3. The method according to claim 1 further comprising or apparatus of claim 2 further configured for updating said occlusion contours and said color models wherein said color models are based on temporal consistency within said video.

4. The method according to claim 1 or 3 further comprising or apparatus of claim 2-3 further configured for updating said occlusion contours and performing rendering modifications for said labelled objects wherein rendering modifications for said labelled objects are with constraint of said updated occlusion contours in a reproduced scene with said added virtual objects.

5. The method according to claim 1 or 3-4 or apparatus of claim 2-4 wherein said rough models are in 3D and wherein said segmentation is performed for said rough 3D model using the geometry characteristics or learned shape prior from 3D model database.

6. The method according to claim 5 or apparatus of claim 5, wherein said 3D rough model is a 3D mesh model, or 3D point cloud, or 3D volume data, and is preferably generated by using metadata.

7. The method according to any of claims 5-6 wherein said 3D rough model is aligned with a beginning frame of at least one of said video content, the method further comprising at least one of the following steps:
- providing a plurality of renderings of line drawings at a plurality of sampling viewpoints for said rough 3D model,
- selecting a best matched viewpoint based on comparing said plurality of renderings with said received scene of said content,
- refining an initial pose by the correspondence between 3D lines detected from said rough 3D model and 2D lines detected from said frames.

8. The apparatus according to any of claims 5-6 wherein said 3D rough model is aligned with a beginning frame of at least one of said video content and said processor is configured to perform at least one of the following provide a plurality of renderings of line drawings at a plurality of sampling viewpoints for said rough 3D model, and to select a best matched viewpoint based on comparing said plurality of renderings with said received scene of said content and to refine an initial pose by the correspondence between 3D lines detected from said rough 3D model and 2D lines detected from said frames.

9. The method according to any of claims of claims 4-7 or apparatus of any of claims 4-6 or 8, wherein said initial occlusion contours for said real objects are generated by projecting said segmented rough 3D model on said aligned frames, and then are evolved to align with the image edges of said frames; and wherein said initial color models for said real objects are calculated for foreground and background with said aligned frames and said evolved occlusion contours, respectively.

10. The method according to any of claims of 1 or 3-7 or 9, or apparatus of any of claims 2-6 or 8-9, wherein temporal consistency is used to update said occlusion contours and said color models for said real objects within sequential frames of said video content and wherein said temporal consistency for said occlusion contour is that a minimum number of tracking points are provided in one or more said real objects within said sequential frame.

11. The method of claim 10 or apparatus of claim 10, wherein a level of complexity is determined by object shape and amount of occlusion in said scene and said minimum number of tracking points are increased based on increasing level of complexity and wherein said any tracking points provided in one frame appear in said sequential frame and maintain object shape and depth integrity.

12. The method of claim 11 or apparatus of claim 11 wherein said temporal consistency for said color model is to combine the color model computed in the former frame and the color model computed in current frame using a weighted average and wherein said occlusion contours and said color models are updated and refined for said real objects using said tracking points.

13. The method of claim 12 or apparatus of claim 12 wherein the visibility of each said object is determined within each sequential frame of said video content and wherein said object is not rendered if it is invisible in said sequential frame so that said occlusion contour is reinitialized based on said segmented rough 3D model if there are not enough tracking points for said real objects.

14. The method of claim 13 or apparatus of claim 13 wherein at least a scene for said sequential frame is reproduced by modifying the rendering of said labelled objects with respect to said updated occlusion contours and said visibility and color of said labelled objects are refined along the said occlusion contours in said sequential frame.

15. A computer-readable medium storing computer-executable instructions executable to perform the method of any of claims 1 and 3-6 or 8-14.
